# EUROPEAN PATENT SPECIFICATION

(11) **EP 3 396 985 B1**
(45) Date of publication and mention of the grant of the patent: **17.03.2021**
(21) Application number: 16877433.9
(22) Date of filing: 11.10.2016
(51) Int. Cl.: H04L 29/06, H04W 4/16, H04W 76/50

(54) **EMERGENCY CALL SWITCHING METHOD AND APPARATUS**
NOTRUFVERMITTLUNGSVERFAHREN UND -VORRICHTUNG
PROCÉDÉ ET APPAREIL DE COMMUTATION D'APPEL D'URGENCE

(30) Priority: 21.12.2015 CN 201510966798
(43) Date of publication of application: 31.10.2018
(73) Proprietor: ZTE Corporation, Shenzhen, Guangdong 518057 (CN)
(72) Inventor: YANG, Qiang, Shenzhen Guangdong 518057 (CN); SU, Dengjun, Shenzhen Guangdong 518057 (CN)
(74) Representative: Novagraaf Technologies
(86) International application number: PCT/CN2016/101800
(87) International publication number: WO 2017/107622

(56) References cited:
- CN-A- 101 175 329
- CN-A- 102 739 669
- CN-A- 103 166 766
- CN-A- 105 144 631
- US-A1- 2013 195 076
- US-A1- 2014 248 848
- US-A1- 2015 016 420
- US-A1- 2015 163 255
- "3rd Generation Partnership Project; Technical Specification Group Services and System Aspects; IP Multimedia Subsystem (IMS) Service Continuity; Stage 2 (Release 13)", 3GPP STANDARD ; TECHNICAL SPECIFICATION ; 3GPP TS 23.237, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.1.0, 15 December 2015 (2015-12-15), pages 1-172, XP051294445, [retrieved on 2015-12-15]

## Description

### FIELD OF THE INVENTION

The present disclosure relates to the field of communications, and in particular, to an emergency call switching method and apparatus.

### BACKGROUND

IP Multimedia Core Subsystem (IMS) is an IP-based network architecture proposed by the 3rd Generation Partnership Project (3GPP) organization, which builds an open and flexible business environment, supports multimedia applications and provides users with rich multimedia services.

At present, the mobile communication includes: a Circuit Service (CS) network and a Packet Service (PS), wherein the Circuit Service (CS) network, such as Global System for Mobile Communication (GSM) and Code Division Multiple Access (CDMA), is mainly used. With the rapid expansion of 4G communication network, it is increasingly necessary to solve the problem of PS-CS communication switching. There are currently specifications for emergency call PS-CS switching.

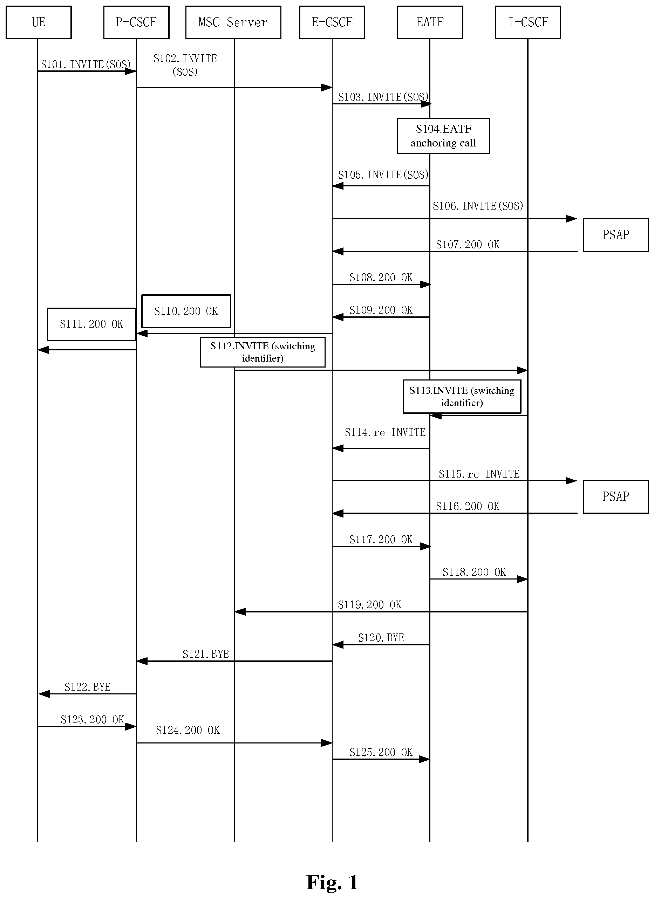

FIG. 1 is a schematic diagram showing a flow chart of an emergency call PS-CS switching specification in the related art. As shown in FIG. 1, the method includes steps of:
Step S101, initiating, by a terminal UE, an emergency call INVITE (SOS) through a packet service PS network access;
Step S102, routing the emergency call to an Emergency Call Session Control Function (E-CSCF) network element by a Proxy Call Session Control Function (P-CSCF) in accordance with an existing mechanism;
Step S103, routing the call to an Emergency Access Trade Function (EATF) network element by the Emergency Call Session Control Function E-CSCF;
Steps S104-S105, anchoring the call , and sending the call to the original Emergency Call Session Control Function E-CSCF network element by the Emergency Access Trade Function EATF;
Steps S106-S111, completing subsequent emergency call procedures in accordance with the existing mechanism.

Step S112, when the terminal moves to the circuit service CS network, initiating an emergency call switching request INVITE to the IMS network by an enhanced Mobile Switching Center (eMSC) Server, wherein the emergency call switching request INVITE carries a switching identifier, and routes the request to an Interrogating Call Session Control Function (I-CSCF) network element of a home domain.

Step S113, routing the switching request to the Emergency Access Trade Function EATF network element by the Interrogating Call Session Control Function I-CSCF network element in accordance with the existing mechanism;
Step S114, identifying, by the Emergency Access Trade Function EATF network element, that the received INVITE message is to initiate a media negotiation process to an existing session on the other side for switching an existing emergency call;

Steps S115-S117, completing the media negotiation in accordance with an existing mechanism;

Steps S118-S119, sending a response message containing the obtained remote media to the enhanced Mobile Switching Center eMSC Server, wherein a media channel between the terminal (accessed through the Circuit Service CS network) and the Public Safety Access Point (PSAP) is established to continue the call;

Steps S120-S125, initiating, by the Emergency Access Trade Function EATF network element, a release of the original Packet Service PS network access side session.

The subsequent processes are the same as the existing related specifications and will not be described in detail herein US 2015/016420 is the closest prior art and discloses a UE that initaties a UE undetected emergency call by sending an Invite to the P-CSCF, the P-CSCF forwards the invite to the E-CSCF, the E-CSCF forwards the invite to the EATF, the EATF anchors the emergency session beore returning the Invite to the E-CSCF and the E-CSCF forwards the invite to the PSAP via a Media Gateway Control Function (MGCF) and/or Interconnection Border Control Function (IBCF).

In the related art, the problem that the complicated message interaction flow caused by the emergency call switching through the existing networking mode has not been effectively resolved.

### SUMMARY

The invention is defined by a method according to independent claim 1 and a session border controller according to independent claim 8. Further embodiments are set out in the dependent claims.

An embodiment of the present disclosure provides an emergency call switching method and apparatus, so as to at least solve the problem of the complicated message interaction process since the emergency call switching is implemented in the existing networking mode in the related art.

In an aspect according to an embodiment of the disclosure, there is provided an emergency call switching method, comprising steps of: receiving, by a Session Border Controller (SBC), an emergency call request sent from a terminal; sending, by the SBC, the emergency call request to a proxy call session control function P-CSCF network element, so that the P-CSCF network element sends the emergency call request to a public safety answering point PSAP by means of an emergency call session control function E-CSCF network element; receiving, by the SBC, an emergency call switching request sent from the terminal, wherein the emergency call switching request includes an emergency call PS-CS switching request and an emergency call CS-PS switching request; and switching, by the SBC, the emergency call in response to the emergency call switching request, so that the terminal makes the emergency call in a switched network, wherein in the case of the emergency call PS-CS switching request, the switched network is a Circuit Service CS network, and in the case of the emergency call CS-PS switching request, the switched network is a Packet Service PS network.

Optionally, before the step of sending, by the SBC, the emergency call request to the P-CSCF network element, the method further comprises: judging, by the SBC, whether the emergency call request satisfies a triggering condition for sending the emergency call request to the P-CSCF network element, wherein the triggering condition includes at least that the SBC completes media anchoring for the emergency call; and in the case where the emergency call request satisfies the triggering condition, triggering the SBC to send the emergency call request to the P-CSCF network element.

Optionally, the step of switching, by the SBC, the emergency call in response to the emergency call switching request, comprises: acquiring, by the SBC, a media resource occupied by the emergency call established by the terminal before the switching; and performing, by the SBC, a media negotiation by using the acquired media resource, so that the terminal makes the emergency call in the switched network through the media resource.

Optionally, the step of acquiring, by the SBC, a media resource occupied by the emergency call established by the terminal before the switching, comprises: acquiring, by the SBC, the PSAP requested by the emergency call established by the terminal before the switching; and the step of performing, by the SBC, a media negotiation by using the acquired media resource, comprises: allocating, by the SBC, the PSAP requested before the switching to the emergency call made after the switching.

Optionally, after the step of switching, by the SBC, the emergency call in response to the emergency call switching request, the method further comprises at least one of steps of: releasing, by the SBC, the emergency call established by the terminal before the switching; and after the SBC determines that the terminal completes the emergency call in the switched network, releasing the emergency call made by the terminal after the switching.

Optionally, a switching requested by the emergency call switching request comprises at least one of: an emergency call switching performed after the response is sent from the SBC to the switched network, an emergency call switching performed before the response is sent from the SBC to the switched network, an emergency call switching from the packet service PS network to the circuit service CS network, or an emergency call switching from the circuit service CS network to the packet service PS network.

Optionally, the SBC, the P-CSCF network element, and the E-CSCF network element are merged into a merged network element.

In another aspect according to an embodiment of the disclosure, there is provided an emergency call switching apparatus applicable to a session border controller SBC, comprising: a first receiving module configured to receive an emergency call request sent from a terminal; a sending module configured to send the emergency call request to a proxy call session control function P-CSCF network element, so that the P-CSCF network element sends the emergency call request to a public safety answering point PSAP by means of an emergency call session control function E-CSCF network element; a second receiving module configured to receive an emergency call switching request sent from the terminal, wherein the emergency call switching request includes an emergency call PS-CS switching request and an emergency call CS-PS switching request; and a switching module configured to switch the emergency call in response to the emergency call switching request, so that the terminal makes the emergency call in a switched network, wherein in the case of the emergency call PS-CS switching request, the switched network is a Circuit Service CS network, and in the case of the emergency call CS-PS switching request, the switched network is a Packet Service PS network.

Optionally, the apparatus further comprises a judgment module configured to judge whether the emergency call request satisfies a triggering condition for sending the emergency call request to the P-CSCF network element before the SBC sends the emergency call request to the P-CSCF network element, wherein the triggering condition at least includes that the SBC completes anchoring of a media for the emergency call; and a first processing module configured to trigger the SBC to send the emergency call request to the P-CSCF network element in the case where the emergency call request satisfies the triggering condition.

Optionally, the switching module comprises: an acquisition unit, configured to acquire a media resource occupied by the emergency call established by the terminal before the switching; and a processing unit, configured to perform a media negotiation using the acquired media resource, so that the terminal makes the emergency call in the switched network through the media resource.

Optionally, the acquisition unit is further configured to acquire the PSAP requested by the emergency call established by the terminal before the switching, and the processing unit is further configured to allocate the PSAP requested before the switching to the emergency call made after the switching.

Optionally, the apparatus further comprises at least one of: a first release module configured to release the emergency call established by the terminal before the switching, after the SBC switches the emergency call in response to the emergency call switching request; and a second release module configured to, after determining that the terminal completes the emergency call in the switched network, release the emergency call made by the terminal after the switching.

Optionally, a switching requested by the emergency call switching request comprises at least one of: an emergency call switching performed after the response is sent from the SBC to the switched network, an emergency call switching performed before the response is sent from the SBC to the switched network, an emergency call switching from the packet service PS network to the circuit service CS network, or an emergency call switching from the circuit service CS network to the packet service PS network.

Optionally, the apparatus further comprises a second processing module configured to merge the SBC, the P-CSCF network element, and the E-CSCF network element into one merged network element.

In still another aspect according to an embodiment of the disclosure, there is provided a storage medium. The storage medium is configured to store program code for executing steps of: receiving, by a Session Border Controller (SBC), an emergency call request sent from a terminal; sending, by the SBC, the emergency call request to a proxy call session control function P-CSCF network element, so that the P-CSCF network element sends the emergency call request to a public safety answering point PSAP by means of an emergency call session control function E-CSCF network element; receiving, by the SBC, an emergency call switching request sent from the terminal; and switching, by the SBC, the emergency call in response to the emergency call switching request, so that the terminal makes the emergency call in a switched network.

Through the embodiments of the present disclosure, the session border controller SBC receives the emergency call request sent from terminal; the SBC sends the emergency call request to the proxy call session control function P-CSCF network element, so that the P-CSCF network element sends the emergency call request to the public safety answering point PSAP through the emergency call session control function E-CSCF network element; the SBC receives the emergency call switching request sent from the terminal; the SBC switches the emergency call in response to the emergency call switching request, so that the terminal makes the emergency call in the switched network. Rather, in the related art, the emergency call switching function EATF network element forwards the emergency call request and responds to the emergency call caused by the emergency call switching request so that the emergency call switching process is complicated. By means of the disclosure, the problem in the related art that a message interaction flow is complex due to the fact that emergency call switching is realized by means of an existing networking mode is solved, thereby achieving the effect of simplifying the message interaction flow for the emergency call switching.

### BRIEF DESCRIPTION OF THE DRAWINGS

The drawings are intended to provide a further understanding of the present disclosure and constitute a part of the present disclosure. The illustrative embodiments of the present disclosure and the description thereof are provided to explain the present disclosure and are not intended to limit the disclosure. In the drawing:
FIG. 1 is a schematic diagram showing a flowchart of an emergency call PS-CS switching specification in the related art;
FIG. 2 is a flowchart of an emergency call switching according to an embodiment of the present disclosure;
FIG. 3 is a flowchart of an emergency call in which an SBC participates according to an embodiment of the present disclosure;
FIG. 4 is a flowchart of implementing an emergency call PS-CS switching by SBC according to an embodiment of the present disclosure;
FIG. 5 is a flowchart of an emergency call in which a merged network element participates according to an embodiment of the present disclosure;
FIG. 6 is a flowchart of an emergency call PS-CS switching in which a merged network element participates according to an embodiment of the present disclosure;
FIG. 7 is a block diagram showing a structure of an emergency call switching apparatus according to an embodiment of the present disclosure;
FIG. 8 is a block diagram (1) showing a structure of an emergency call switching apparatus according to an embodiment of the present disclosure;
FIG. 9 is a block diagram (2) showing a structure of an emergency call switching apparatus according to an embodiment of the present disclosure;
FIG. 10 is a block diagram (3) showing a structure of an emergency call switching apparatus according to an embodiment of the present disclosure; and
FIG. 11 is a block diagram (4) showing a structure of an emergency call switching apparatus according to an embodiment of the present disclosure.

### DETAILED DESCRIPTION OF THE EMBODIMENTS

The disclosure will be described in detail below with reference to the drawings in conjunction with the embodiments. It should be noted that the embodiments in the present disclosure and the features in the embodiments may be combined with each other if there is no conflict.

It should be noted that the terms "first", "second" and the like in the specification and claims of the present disclosure and the above-mentioned drawings are provided to distinguish similar objects, and are not necessarily used to describe a specific order or prioritization.

### First Embodiment

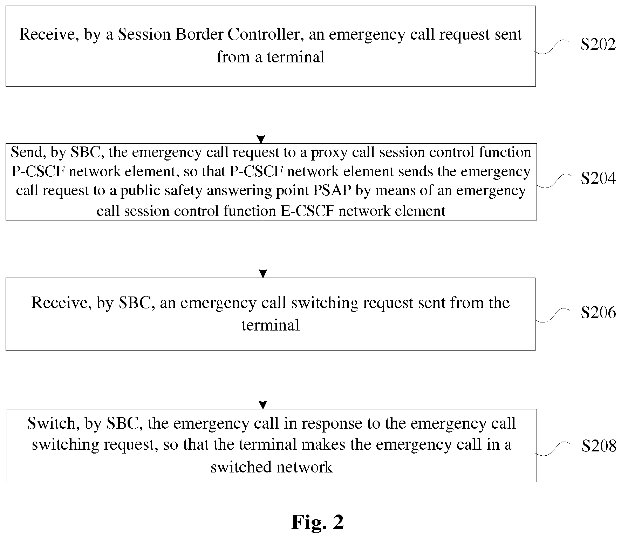

In this embodiment, an emergency call switching method is provided. FIG. 2 is a flowchart of an emergency call switching according to an embodiment of the present disclosure. As shown in FIG. 2, the method includes steps of:
Step S202, receiving, by a Session Border Controller (SBC), an emergency call request sent from a terminal;
Step S204, sending, by the SBC, the emergency call request to a proxy call session control function P-CSCF network element, so that the P-CSCF network element sends the emergency call request to a public safety answering point PSAP by means of an emergency call session control function E-CSCF network element;
Step S206, receiving, by the SBC, an emergency call switching request sent from the terminal; and
Step S208, switching, by the SBC, the emergency call in response to the emergency call switching request, so that the terminal makes the emergency call in a switched network.

Optionally, in this embodiment, an application scenario of the above emergency call switching method includes, but is not limited to, an IP Multimedia Core Subsystem (IMS). In this scenario, the session border controller SBC receives the emergency call request sent from terminal; the SBC sends the emergency call request to the proxy call session control function P-CSCF network element, so that the P-CSCF network element sends the emergency call request to the public safety answering point PSAP through the emergency call session control function E-CSCF network element; the SBC receives the emergency call switching request sent from the terminal; the SBC switches the emergency call in response to the emergency call switching request, so that the terminal makes the emergency call in the switched network. Rather, in the related art, the emergency call switching function EATF network element forwards the emergency call request and responds to the emergency call caused by the emergency call switching request so that the emergency call switching process is complicated. By means of the embodiment, the problem in the related art that a message interaction flow is complex due to the fact that emergency call switching is realized by means of an existing networking mode is solved, thereby achieving the effect of simplifying the message interaction flow for the emergency call switching.

That is, the embodiment of the present disclosure implements the forwarding of the emergency call request message and the response to the emergency call switching request by the session border controller SBC established between the terminal and the proxy call session control function P-CSCF network element. Rather, in the related art, the emergency call session control function E-CSCF network element needs to forward the call to the emergency access trade function EATF network element. The emergency access trade function EATF network element anchors the call and forwards the call to the original emergency call session control function E-CSCF network element, and the emergency call session control function E-CSCF network element forwards the emergency call to the public safety answering point PSAP, resulting in the problem of complicated emergency call flow since the processing operation of forwarding the emergency call request message is repeatedly performed at least by the call session control function E-CSCF network element.

Further, when the SBC receives the emergency call switching request sent from the terminal, the SBC switches the emergency call in respond to the emergency call switching request, so that the terminal makes the emergency call in the switched network. Rather, in the related art, the emergency call trade function EATF network element implements the emergency call switching, which causes a complex message interaction process by means of the emergency call switching in the existing networking mode. Thereby this embodiment of the disclosure can achieve an effect of simplifying a message interaction process of the emergency call switching.

The present embodiment will be illustrated below with reference to specific examples.

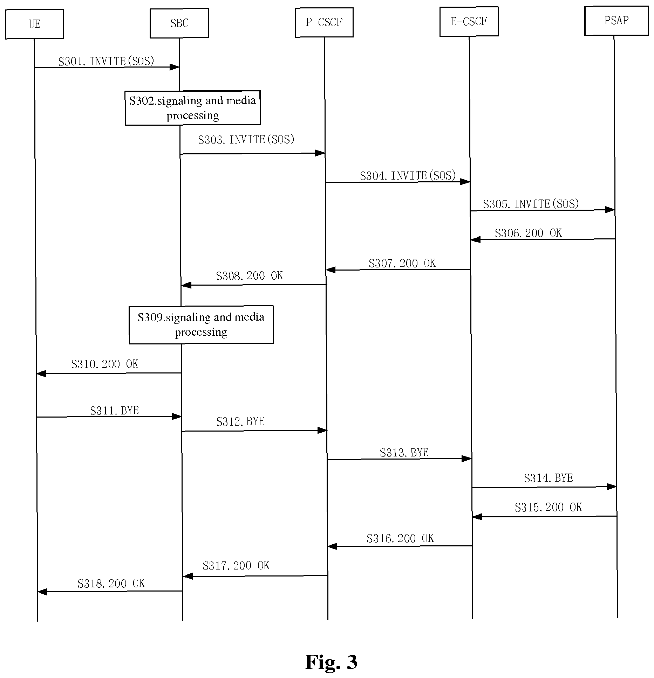

FIG. 3 is a flowchart of an emergency call in which an SBC participates according to an embodiment of the present disclosure. As shown in FIG. 3, the process mainly includes steps of:

Step S301, initiating, by the terminal UE, an emergency call request message (INVITE (SOS)) through an access of the packet network PS.

Step S302, executing, by the session border controller SBC, signaling and media processing, wherein the media processing may include, but is not limited to, media anchoring, address translation, and transcoding.

Step S303, forwarding, by the session border controller SBC, the emergency call request message (INVITE (SOS)) to the proxy call session control function P-CSCF network element after completing the signaling and media processing.

Step S304, analyzing, by the proxy call session control function P-CSCF, that it is an emergency call, and forwarding the call to the emergency call session control function E-CSCF.

Step S305 to Step S318, implementing the emergency call and the call release according to the prior art, details of which are not described herein.

It can be seen that, in this embodiment, the emergency access trade function EATF network element in the existing specification is not required in the networking specification of the emergency call, and thus the process of the message interaction in which the EATF network element participates is also reduced accordingly, improving the speed of making the emergency call.

In an optional implementation, before the SBC sends the emergency call request to the P-CSCF network element, the method further includes steps of:
Step S11, judging, by the SBC, whether a trigger condition for sending the emergency call request to the P-CSCF network element is satisfied; and
Step S12, in the case where a judgment result is yes, triggering the SBC to send the emergency call request to the P-CSCF network element.

It should be noted that, in this embodiment, the triggering conditions include, but are not limited to, that the SBC completes the anchoring of media for the emergency call, the SBC completes the address translation for the emergency call, and SBC completes the transcoding for the emergency call.

Through the above steps, the SBC judges whether the trigger condition for sending of the emergency call request to the P-CSCF network element is satisfied. In the case where the SBC determines that the trigger condition is satisfied, the SBC is triggered to send the emergency call request to the P-CSCF network element. Further, the problem of complicated message interaction process caused by the emergency call in the existing networking mode is further solved, thereby achieving the effect of simplifying the message interaction process of the emergency call.

In an optional implementation, the step of switching, by the SBC, the emergency call in response to the emergency call switching request includes steps of: Step S21, acquiring, by the SBC, a media resource occupied by the emergency call established by the terminal before the switching; and
Step S22, performing, by the SBC, a media negotiation by using the acquired media resource, so that the terminal makes the emergency call in the switched network through the media resource.

Through the foregoing steps, the SBC acquires the media resource occupied by the emergency call established by the terminal before the switching, and the SBC uses the acquired media resource to perform the media negotiation, so that the terminal makes the emergency call in the switched network by the media resource without a media negotiation with remote end, further ensuring the continuity of the emergency call after the terminal is switched and speeding up the emergency call switching.

In an optional implementation, the step of acquiring, by the SBC, a media resource occupied by the emergency call established by the terminal before the switching includes a step of:
Step S31, acquiring, by the SBC, the PSAP requested by the emergency call established by the terminal before the switching.

The step of performing, by the SBC, a media negotiation by using the acquired media resource, include a step of:
Step S32, allocating, by the SBC, the PSAP requested before the switching to the emergency call made after the switching.

Optionally, in this embodiment, the SBC acquires the PSAP requested by the terminal before the switching, and the SBC allocates the PSAP requested before the switching to the emergency call made after the switching, without the media negotiation with the remote end, so that the message interaction process can be reduced, and the switching speed is accelerated. Rather, in the related art, the emergency access trade function EATF network element needs to perform the media negotiation with the remote public safety answering point PSAP after receiving the terminal switching request message and to acquire multimedia resources from the PSAP according to the negotiation result, which causes the problems of complicated processes, slow switching speed, and increment in the burden of the EATF network element itself.

Through the foregoing steps of this embodiment, the switching process is closed at the SBC with no relationship with the emergency call center, which can significantly speed up the switching, improve the user experience, and also improve the switching success rate and the success rate of switching back process in the case of the switching failure.

This embodiment will be illustrated below with reference to specific examples.

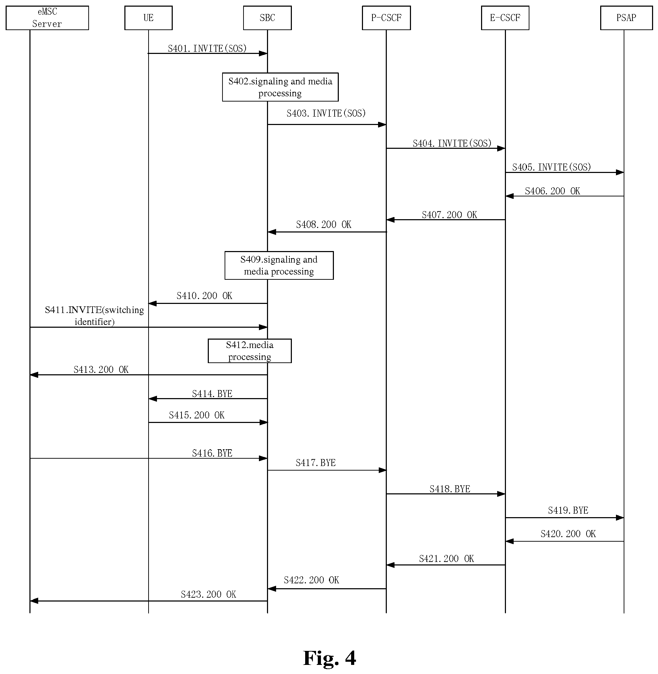

FIG. 4 is a flowchart of implementing an emergency call PS-CS switching by SBC according to an embodiment of the present disclosure. As shown in Figure 4, the method mainly includes steps of:
Steps S401 to S410, which are the same as steps S301 to S310 of FIG. 3, are emergency call procedures in a scenario in which the terminal has not been switched, and the description thereof will be omitted herein;
Step S411, transferring the terminal UE from the packet service PS network to the circuit service CS network, initiating an emergency call switching request INVITE message (which carries the switching identifier) to the IP multimedia system IMS network through the enhanced mobile switching center MSC Server, and routing the request is to the session border controller SBC;
Step S412, identifying, by the SBC, that the received INVITE message is to switch an existing emergency call, and performing media processing using a half-side media negotiation technology;
Step S413, after performing the media processing operation, sending, by the SBC, response message (200 OK) to a switching call to connect the media between the switching call and the public response point PSAP, to implement the communication continuity between the terminal and the emergency call center.

Steps S414 to S415, after the PS-CS switching of the call is normally completed, sending a release request (BYE) to the call initiated by the terminal located on the PS network, to release the call initiated by the terminal on the PS network.

Steps S416 to S423, after the call ends, releasing the call.

As can be seen from the above steps, the switching procedure is closed at the SBC with no relationship with the emergency call center. This obviously can accelerate the switching speed, improve the user experience, and also improve the success rate of the switching and the success rate of switching back process in the case of the switching failure.

It should be noted that the above process is a schematic process, and specific messages and processes thereof follow the SIP specification. The mechanism is also applicable to implement emergency call CS-PS switching of the terminal from CS roaming to PS, as long as the initial access in FIG. 4 is changed from PS to CS and the switching call is changed from CS to PS.

The switching flowchart shown in FIG. 4 can also be extended to the pre-response switching, as long as the 200 OK returned from the SBC to the CS domain is changed to a temporary response (such as 180) carrying the media. It is even applicable to switching before the ringing state, for example, in a state of resource reservation (switching response is 183). Subsequent SIP message interaction can be implemented by using the existing B2BUA method. Of course, the info message can be reissued in order to notify a forward direction of the switching.

It should be further noted that the interaction between the E-CSCF and a Location Require Function (LRF) network element in the prior art is employed in FIG. 4, which is not shown in the schematic flowchart. Moreover, the messages between the network elements in the embodiment are mainly for clearly indicating the acquisition of the access network switching information and the idea of call switching, which is not limited to these network elements and messages in a specific implementation.

In an optional implementation, after the SBC switches the emergency call in respond to the emergency call switching request, the method further includes at least one of steps of:
Step S41, releasing, by the SBC, the emergency call established by the terminal before the switching; and
Step S42, after the SBC determines that the terminal completes the emergency call in the switched network, releasing the emergency call made by the terminal after the switching.

Through the foregoing steps, the SBC releases the emergency call occupied by the terminal in the network of before the switching to avoid the problem of resource waste since the terminal that has switched to another network also consumes the network resources before its switching. After the emergency call is made by the terminal after the switched network, the SBC releases the emergency call occupied by the terminal in the switched network, which avoids the problem that the current network resources are wasted by the terminal that has closed the emergency call but also occupies network resources.

In an optional implementation, a switching requested by the emergency call switching request includes at least one of: an emergency call switching performed after the response is sent from the SBC to the switched network, an emergency call switching performed before the response is sent from the SBC to the switched network, an emergency call switching from the packet service PS network to the circuit service CS network, or an emergency call switching from the circuit service CS network to the packet service PS network.

Optionally, in this embodiment, the method for the emergency call switching is applied to the above application scenario, and the effect of simplifying the message interaction process of the emergency call switching in the application scenario can be further achieved.

In an optional implementation, the SBC, the P-CSCF network element, and the E-CSCF network element are merged into one merged network element.

Optionally, in this embodiment, the merging manner of the merged network element includes, but is not limited to, merging the SBC, the P-CSCF network element, and the E-CSCF network element into one merged network element; merging the SBC, and the P-CSCF network element into one merged network element through which the message interaction is directly made with the E-CSCF network element; merging the P-CSCF network element and the E-CSCF network element into one merged network element, so that the SBC interacts with the merged network element.

Through the foregoing method, the SBC, the P-CSCF network element, and the E-CSCF network element are merged into one merged network element, solving the problem in the related art of the complicated process caused by the message interaction between different network elements and the long delay of the emergency call establishment and emergency call switching, greatly simplifying the message interaction process of emergency call and emergency call switching, and speeding up the emergency call establishment and emergency call switching.

The present embodiment will be illustrated below in conjunction with specific embodiments.

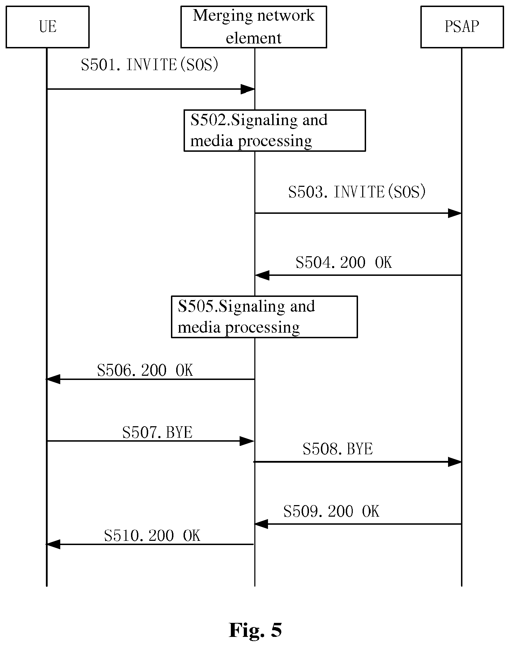

FIG. 5 is an emergency call process in which a merged network element participates in accordance with an embodiment of the present disclosure. In the actual network, as shown in FIG. 1, the 3GPP IMS specification deploys logical network elements. A great number of network elements complicatedly interacts with each other. Since the traditional SBC (Border Gateway), the P-CSCF, and E-CSCF are deployed in a visit domain, there is a possibility of merging. Therefore, this embodiment proposes a merged network element, which simplifies the message interaction process by merging the traditional SBC (Border Gateway), P-CSCF, and E-CSCF into one merged network element. As shown in FIG. 5, the method mainly includes steps of:
Step S501, initiating, by a user, the emergency call INVITE (SOS) through the packet service network PS access.

Step S502, determining to be the emergency call by analysis of the merging network element, querying an outgoing route according to the prior art, and implementing the signaling and media processing of the SBC (Border Gateway), wherein the media processing may include, but is not limited to, a media anchor, address translation, and transcoding;
Step S503, sending, by the merged network element, an emergency call request message (INVITE (SOS)) to the public safety answering point PSAP, or routing an emergency call request message (INVITE (SOS)) to the network element of the PSAP;
It should be noted that the routing to the PSAP may be implemented by using a query location request function LRF or the like.

Steps S504 to S510, using existing media negotiation and SIP message processing technologies, to implement a subsequent communication and release process, details of which will be omitted herein.

In the above example, any steps concerning the participation of the emergency access trade function EATF network element in the related art is not involved. It can be seen that the network element deployment, internal logic, and message interaction are greatly simplified. Of course, it is also beneficial to speed up the connection and provide call reliability.

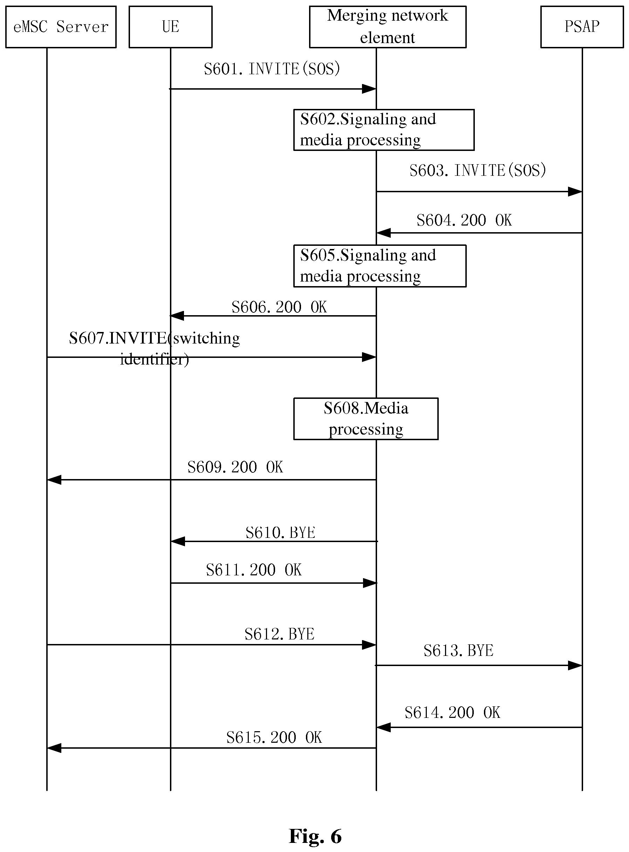

FIG. 6 is a flowchart of an emergency call PS-CS switching in which a merged network element participates according to an embodiment of the present disclosure. As shown in Figure 6, the method mainly includes steps of:
Steps S601 to S606, which are the same as steps S501 to S506 in FIG. 5, are directed to an emergency call process when the terminal has not been switched, repeated description of which will be omitted herein;
Step S607, transferring the terminal UE from the packet service PS network to the circuit service CS network, initiating an emergency call switching request INVITE message (which carries the switching identifier) to the IP multimedia system IMS network through the enhanced mobile switching center MSC Server, and routing the emergency call switching request message to the merged network element;
Step S608, identifying, by the merging network element, that the received INVITE message is to switch an existing emergency call, and performing media processing using a half-side media negotiation technology;
Step S609, after performing the media processing operation, sending, by the merged network element, response message (200 OK) to a switching call to connect the media between the switching call and the public safety answering point PSAP, to implement the communication continuity between the user and the emergency call center;
Steps S610 to S611, after the PS-CS switching of the call is normally completed, sending a release request (BYE) to the PS call to release the PS call;
Steps S612 to S615, after the call ends, releasing the call.

As can be seen from the above steps, the switching procedure is closed in the merged network element with no relationship with the emergency call center. This obviously can accelerate the switching speed, improve the user experience, and also improve the success rate of the switching and the success rate of switching back in the case of the switching failure.

It should be noted that the above process is a schematic process, and specific messages and processes thereof follow the SIP specification. The mechanism is also applicable to implement emergency call CS-PS switching of the user from CS roaming to PS, as long as the initial access in FIG. 6 is changed from PS to CS and the switching call is changed from CS to PS.

Further, the switching flowchart shown in FIG. 6 can also be extended to the pre-response switching, as long as the 200 OK returned from the merged network element to the CS domain is changed to a temporary response (such as 180) carrying the media. It is even applicable to switching before the ringing state, for example, in a state of resource reservation (switching response is 183). Subsequent SIP message interaction can be implemented by using the existing B2BUA method. Of course, the info message can be reissued in order to notify a forward direction of the switching.

Through the embodiment, the engineering networking and routing configuration can be simplified, and the switching speed can be accelerated to improve the user experience. It is also possible to reduce the interaction between network elements. In particular:
1) Even if the PS-CS switching supports the emergency call, the emergency access trade function EATF network element in the existing specification is not required when the switching does not occur, and the corresponding process can be reduced.
   If a merged network element is used, fewer network elements and processes are required.
3) In the emergency call and its switching in which the merged network element participates, fewer processes and fast speed can be provided without the media negotiation with the remote end.
4) In the emergency call and its switching in which the SBC (non-merged network element) participates, the process thereof is also less than the standard process and the speed is fast without the media negotiation with the remote end.

Through the description of the above embodiments, those skilled in the art can clearly understand that the method according to the above embodiments can be implemented by means of software plus a necessary general hardware platform, and of course, can also be through hardware, but in many cases, the former is a better implementation. Based on such understanding, the technical solution of the present disclosure, which is essential or contributes to the prior art, may be embodied in the form of a software product stored in a storage medium (such as ROM/RAM, magnetic disk, optical disk) and including a number of instructions for a terminal device (which may be a cell phone, a computer, a server, or a network device, etc.) to perform the methods described in various embodiments of the present disclosure.

### Second Embodiment

In this embodiment, an emergency call switching apparatus is also provided, which is used to implement the above-mentioned embodiments and preferred implementations the description of which will be omitted herein. As used below, the term "module" may implement a combination of software and/or hardware having a predetermined function. Although the apparatuses described in the following embodiments are preferably implemented in the software, the hardware or a combination of software and hardware is also possible and conceived.

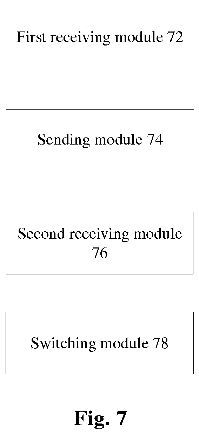

FIG. 7 is a block diagram showing a structure of an emergency call switching apparatus according to an embodiment of the present disclosure. As shown in FIG. 7, the apparatus is applied to a session border controller SBC, which includes:
1) a first receiving module 72 configured to receive an emergency call request sent from a terminal;
2) a sending module 74 configured to send the emergency call request to a proxy call session control function P-CSCF network element, so that the P-CSCF network element sends the emergency call request to a public safety answering point PSAP by means of an emergency call session control function E-CSCF network element;
3) a second receiving module 76 configured to receive an emergency call switching request sent from the terminal; and
4) a switching module 78 configured to switch the emergency call in response to the emergency call switching request, so that the terminal makes the emergency call in a switched network.

Optionally, in this embodiment, an application scenario of the above emergency call switching method includes, but is not limited to, an IP Multimedia Core Subsystem (IMS). In this scenario, the session border controller SBC receives the emergency call request sent from terminal; the SBC sends the emergency call request to the proxy call session control function P-CSCF network element, so that the P-CSCF network element sends the emergency call request to the public safety answering point PSAP through the emergency call session control function E-CSCF network element; the SBC receives the emergency call switching request sent from the terminal; the SBC switches the emergency call in response to the emergency call switching request, so that the terminal makes the emergency call in the switched network. Rather, in the related art, the emergency call switching function EATF network element forwards the emergency call request and responds to the emergency call caused by the emergency call switching request so that the emergency call switching process is complicated. By means of the embodiment, the problem in the related art that a message interaction flow is complex due to the fact that emergency call switching is realized by means of an existing networking mode is solved, thereby achieving the effect of simplifying the message interaction flow for the emergency call switching.

That is, the embodiment of the present disclosure implements the forwarding of the emergency call request message and the response to the emergency call switching request by the session border controller SBC established between the terminal and the proxy call session control function P-CSCF network element. Rather, in the related art, the emergency call session control function E-CSCF network element needs to forward the call to the emergency access trade function EATF network element, and the emergency access trade function EATF network element anchors the call and forwards the call to the original emergency call session control function E-CSCF network element, and the emergency call session control function E-CSCF network element forwards the emergency call to the public safety answering point PSAP, resulting in the problem of complicated emergency call flow since the processing operation of forwarding the emergency call request message is repeatedly performed at least by the call session control function E-CSCF network element.

Further, when the SBC receives the emergency call switching request sent from the terminal, the SBC switches the emergency call in respond to the emergency call switching request, so that the terminal makes the emergency call in the switched network. Rather, in the related art, the emergency call trade function EATF network element implements the emergency call switching, which causes a complex message interaction process by means of the emergency call switching in the existing networking mode. Thereby this embodiment of the disclosure can achieve an effect of simplifying a message interaction process of the emergency call switching.

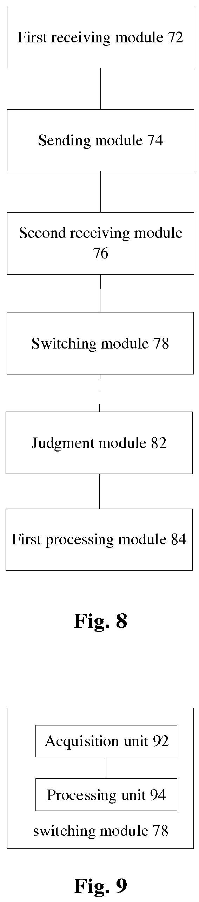

In an optional implementation, FIG. 8 is a structural block diagram (1) of an emergency call switching apparatus according to an embodiment of the present disclosure. As shown in FIG. 8, in addition to modules as shown in FIG. 7, the apparatus includes:
1) a judgment module 82 configured to judge whether a trigger condition for sending the emergency call request to the P-CSCF network element is satisfied before the SBC sends the emergency call request to the P-CSCF network element, wherein the triggering condition at least includes that the SBC completes anchoring of a media for the emergency call; and
2) a first processing module 84 configured to trigger the SBC to send the emergency call request to the P-CSCF network element if a judgment result is yes.

It should be noted that, in this embodiment, the triggering conditions include, but are not limited to, that the SBC completes anchoring of the media for the emergency call, the SBC completes the address translation for the emergency call, and SBC completes the transcoding for the emergency call.

Through the foregoing apparatus, the SBC judges whether the trigger condition for sending the emergency call request to the P-CSCF network element is satisfied. In the case where the SBC determines that the trigger condition is satisfied, the SBC is to send the emergency call request to the P-CSCF network element. Further, the problem of complicated message interaction process caused by the emergency call in the existing networking mode is further solved, thereby achieving the effect of simplifying the message interaction process of the emergency call.

In an optional implementation, FIG. 9 is a structural block diagram (2) of an emergency call switching apparatus according to an embodiment of the present disclosure. As shown in FIG. 9, the switching module 78 includes:
1) an acquisition unit 92, configured to acquire a media resource occupied by the emergency call established by the terminal before the switching; and
2) a processing unit 94, configured to perform a media negotiation using the acquired media resource, so that the terminal makes the emergency call in the switched network through the media resource.

Through the foregoing apparatus, the SBC acquires the media resource occupied by the emergency call established by the terminal before the switching, and the SBC uses the acquired media resource to perform the media negotiation, so that the terminal makes the emergency call in the switched network by the media resource without a media negotiation with remote end, further ensuring the continuity of the emergency call after the terminal is switched, and speeding up the emergency call switching.

Optionally, in this embodiment, the acquisition unit 92 is further configured to acquire the PSAP requested by the emergency call established by the terminal before the switching, and the processing unit 94 is further configured to allocate the PSAP requested before the switching to the emergency call made after the switching.

Optionally, in this embodiment, the SBC acquires the PSAP requested by the emergency call established by the terminal before the switching, and the SBC allocates the PSAP requested before the switching to the emergency call made after the switching, without the media negotiation with the remote end, so that the message interaction process can be reduced, and the switching speed is accelerated. Rather, in the related art, the emergency access trade function EATF network element needs to perform the media negotiation with the remote public safety answering point PSAP after receiving the terminal switching request message and to acquire multimedia resources from the PSAP according to the negotiation result, which causes the problems of complicated processes, slow switching speed, and increment in the burden of the EATF network element itself.

Through the foregoing apparatus of this embodiment, the switching process is closed at the SBC with no relationship with the emergency call center, which can significantly speed up the switching, improve the user experience, and also improve the switching success rate and the success rate of switching back processing in the case of the switching failure.

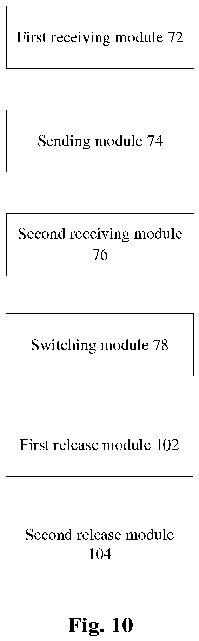

In an optional implementation, FIG. 10 is a structural block diagram (3) of an emergency call switching apparatus according to an embodiment of the present disclosure. As shown in FIG. 10, in addition to the modules as shown in FIG. 7, the apparatus includes:
1) a first release module 102 configured to release the emergency call established by the terminal before the switching, after the SBC switches the emergency call in response to the emergency call switching request; and
2) a second release module 104 configured to, after determining that the terminal completes the emergency call in the switched network, release the emergency call made by the terminal after the switching.

It should be noted that the apparatus may further include only one of the first release module 102 and the second release module 104, details of which will not be described herein.

Through the foregoing apparatus, the SBC releases the emergency call occupied by the terminal in the network of before the switching to avoid the problem of resource waste since the terminal that has switched to another network also consumes the network resources before its switching. After the emergency call is made by the terminal after the switched network, the SBC releases the emergency call occupied by the terminal in the switched network, which avoids the problem that the current network resources are wasted by the terminal that has closed the emergency call but also occupies network resources.

Optionally, a switching requested by the emergency call switching request in this embodiment includes at least one of: an emergency call switching performed after the response is sent from the SBC to the switched network, an emergency call switching performed before the response is sent from the SBC to the switched network, an emergency call switching from the packet service PS network to the circuit service CS network, or an emergency call switching from the circuit service CS network to the packet service PS network.

Optionally, in this embodiment, by applying the emergency call switching to the above application scenario, the effect of simplifying the message interaction process of the emergency call switching in the application scenario can be further achieved.

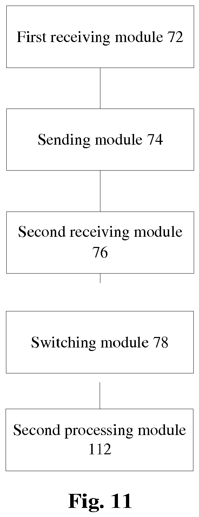

In an optional implementation, FIG. 11 is a structural block diagram (4) of an emergency call switching apparatus according to an embodiment of the present disclosure. As shown in FIG. 11, in addition to the modules as shown in FIG. 7, the apparatus includes:
1) a second processing module 112 configured to merge the SBC, the P-CSCF network element, and the E-CSCF network element into one merged network element.

It should be noted that, in this embodiment, the second processing module 112 may also be connected to the modules included in the apparatus shown in FIG. 8 or FIG. 10, details of which will not be described herein. Through the foregoing apparatus, the SBC, the P-CSCF network element, and the E-CSCF network element are merged into one merged network element, solving the problem in the related art of the complicated process caused by the message interaction between different network elements and the long delay of the emergency call establishment and emergency call switching, greatly simplifying the message interaction process of emergency call and emergency call switching, and speeding up the emergency call establishment and emergency call switching.

It should be noted that each of the above modules may be implemented by software or hardware. The latter may be implemented by, but not limited to, placing all the foregoing modules in one processor or in multiple processors, respectively.

### Third Embodiment

An embodiment of the present disclosure also provides a storage medium. For the application scenarios and examples of this embodiment, reference may be made to the first and second embodiments, details of which will not be are not described herein. Optionally, in this embodiment, the foregoing storage medium may be configured to store program code for executing steps of:
S1, receiving, by a Session Border Controller (SBC), an emergency call request sent from a terminal;
S2, sending, by the SBC, the emergency call request to a proxy call session control function P-CSCF network element, so that the P-CSCF network element sends the emergency call request to a public safety answering point PSAP by means of an emergency call session control function E-CSCF network element;
S3, receiving, by the SBC, an emergency call switching request sent from the terminal; and
S4, switching, by the SBC, the emergency call in response to the emergency call switching request, so that the terminal makes the emergency call in a switched network.

Optionally, in this embodiment, the foregoing storage medium may include, but not limited to, a USB disk, a Read-Only Memory (ROM), a Random-Access Memory (RAM), a mobile hard disk, a magnetic disk, an optical disk or a variety of media that can store program code, for example.

Optionally, in this embodiment, the processor executes the above steps S1, S2, S3 according to the program code stored in the storage medium.

Optionally, the specific examples in this embodiment may refer to the examples described in the foregoing embodiments and the optional implementation, details of which will not be described herein.

It will be apparent to those skilled in the art that the various modules or steps of the present disclosure described above can be implemented by a general-purpose computing device, which can be centralized on a single computing device or distributed on a network formed by the multiple computing devices. Alternatively, the modules or steps may be implemented by program code executable by the computing device such that they may be stored in the storage device for the computing device. In some cases, they may be performed in a different sequence from the steps shown or described herein, or they are separately fabricated into individual integrated circuit modules, or a plurality of modules or steps thereof are fabricated as a single integrated circuit module. Thus, the disclosure is not limited to any specific combination of hardware and software.

While the disclosure has been shown and described with reference to various embodiments thereof, it will be understood by those skilled in the art that various changes in form and details may be made therein without departing from the scope of the disclosure as defined by the appended claims.

## Claims

1. An emergency call switching method, **characterized in that** the method comprises steps of:
receiving (S202), by a session border controller SBC, an emergency call request sent from a terminal;
sending (S204), by the SBC, the emergency call request to a proxy call session control function P-CSCF network element, so that the P-CSCF network element sends the emergency call request to a public safety answering point PSAP by means of an emergency call session control function E-CSCF network element;
receiving (S206), by the SBC, an emergency call switching request sent from the terminal, wherein the emergency call switching request includes an emergency call PS-CS switching request and an emergency call CS-PS switching request; and
switching (S208), by the SBC, the emergency call in response to the emergency call switching request, so that the terminal makes the emergency call in a switched network, wherein in the case of the emergency call PS-CS switching request, the switched network is a Circuit Service CS network, and in the case of the emergency call CS-PS switching request, the switched network is a Packet Service PS network.

2. The method according to claim 1, wherein before the step of sending (S204), by the SBC, the emergency call request to the P-CSCF network element, the method further comprises:
judging (SI1), by the SBC, whether the emergency call request satisfies a triggering condition for sending the emergency call request to the P-CSCF network element, wherein the triggering condition includes at least that the SBC completes anchoring of a media for the emergency call; and
triggering (S12) the SBC to send the emergency call request to the P-CSCF network element in the case where the emergency call request satisfies the triggering condition.

3. The method according to claim 1, wherein the step of switching (S208), by the SBC, the emergency call in response to the emergency call switching request, comprises:
acquiring (S21), by the SBC, a media resource occupied by the emergency call established by the terminal before the switching; and
performing (S22), by the SBC, a media negotiation by using the acquired media resource, so that the terminal makes the emergency call in the switched network through the media resource.

4. The method according to claim 3, wherein
the step of acquiring (S21), by the SBC, a media resource occupied by the emergency call established by the terminal before the switching, comprises: acquiring (S31), by the SBC, the PSAP requested by the emergency call established by the terminal before the switching; and
the step of performing (S22), by the SBC, a media negotiation by using the acquired media resource, comprises: allocating (S32), by the SBC, the PSAP requested before the switching to the emergency call made after the switching.

5. The method according to claim 3, wherein after the step of switching (S208), by the SBC, the emergency call in response to the emergency call switching request, the method further comprises at least one of steps of:
releasing (S41), by the SBC, the emergency call established by the terminal before the switching; and
releasing (S42) the emergency call made by the terminal after the switching after the SBC determines that the terminal completes the emergency call in the switched network.

6. The method according to claim 1, wherein a switching requested by the emergency call switching request comprises at least one of: an emergency call switching performed after the response is sent from the SBC to the switched network, an emergency call switching performed before the response is sent from the SBC to the switched network, an emergency call switching from the packet service PS network to the circuit service CS network, or an emergency call switching from the circuit service CS network to the packet service PS network.

7. The method according to any one of claims 1 to 6, wherein the SBC, the P-CSCF network element, and the E-CSCF network element are merged into one merged network element.

8. An emergency call switching apparatus applicable to a session border controller SBC, **characterized in that** the emergency call switching apparatus comprises:
a first receiving module (72) configured to receive an emergency call request sent from a terminal;
a sending module (74) configured to send the emergency call request to a proxy call session control function P-CSCF network element, so that the P-CSCF network element sends the emergency call request to a public safety answering point PSAP by means of an emergency call session control function E-CSCF network element;
a second receiving module (76) configured to receive an emergency call switching request sent from the terminal, wherein the emergency call switching request includes an emergency call PS-CS switching request and an emergency call CS-PS switching request; and
a switching module (78) configured to switch the emergency call in response to the emergency call switching request, so that the terminal makes the emergency call in a switched network, wherein in the case of the emergency call PS-CS switching request, the switched network is a Circuit Service CS network, and in the case of the emergency call CS-PS switching request, the switched network is a Packet Service PS network.

9. The apparatus according to claim 8, further comprising:
a judgment module (82) configured to judge whether the emergency call request satisfies a triggering condition for sending the emergency call request to the P-CSCF network element before the SBC sends the emergency call request to the P-CSCF network element, wherein the triggering condition at least includes that the SBC completes anchoring of a media for the emergency call; and
a first processing module (84) configured to trigger the SBC to send the emergency call request to the P-CSCF network element in the case where the emergency call request satisfies the triggering condition.

10. The apparatus according to claim 8, wherein the switching module (78) comprises:
an acquisition unit (92), configured to acquire a media resource occupied by the emergency call established by the terminal before the switching; and
a processing unit (94), configured to perform a media negotiation using the acquired media resource, so that the terminal makes the emergency call in the switched network through the media resource.

11. The apparatus according to claim 10, wherein
the acquisition unit (92) is further configured to acquire the PSAP requested by the emergency call established by the terminal before the switching, and
the processing unit (94) is further configured to allocate the PSAP requested before the switching to the emergency call made after the switching.

12. The apparatus according to claim 11, wherein the apparatus further comprises at least one of:
a first release module (102) configured to release the emergency call established by the terminal before the switching, after the SBC switches the emergency call in response to the emergency call switching request; and
a second release module (104) configured to, after determining that the terminal completes the emergency call in the switched network, release the emergency call made by the terminal after the switching.

13. The apparatus according to claim 8, wherein a switching requested by the emergency call switching request comprises at least one of: an emergency call switching performed after the response is sent from the SBC to the switched network, an emergency call switching performed before the response is sent from the SBC to the switched network, an emergency call switching from the packet service PS network to the circuit service CS network, or an emergency call switching from the circuit service CS network to the packet service PS network.

14. The apparatus according to any one of claims 8 to 13, further comprising: a second processing module (112) configured to merge the SBC, the P-CSCF network element, and the E-CSCF network element into one merged network element.

## Patentansprüche

1. Notrufvermittlungsverfahren, **dadurch gekennzeichnet, dass** das Verfahren die folgenden Schritte umfasst:
Empfangen (S202), durch einen Session Border Controller, SBC, einer von einem Endgerät gesendeten Notrufanfrage;
Senden (S204), durch den SBC, der Notrufanfrage an ein Proxy Call Session Control Funktions-, P-CSCF-Netzwerkelement, sodass das P-CSCF-Netzwerkelement die Notrufanfrage anhand eines Notruf Session Control Funktions-, E-CSCF-Netzwerkelements an eine öffentliche Notrufzentrale, PSAP, sendet;
Empfangen (S206), durch den SBC, einer Notrufvermittlungsanfrage, die von dem Endgerät gesendet wird, wobei die Notrufvermittlungsanfrage eine Notruf-PS-CS-Vermittlungsanfrage und eine Notruf-CS-PS-Vermittlungsanfrage beinhaltet; und
Vermitteln (S208), durch den SBC, des Notrufs als Antwort auf die Notrufvermittlungsanfrage, sodass das Endgerät den Notruf in einem vermittelten Netzwerk tätigt, wobei das vermittelte Netzwerk im Falle der Notruf-PS-CS-Vermittlungsanfrage ein Circuit Service-, CS-Netzwerk ist, und das vermittelte Netzwerk im Falle der Notruf-CS-PS-Vermittlungsanfrage ein Packet Service-, PS-Netzwerk ist.

2. Verfahren nach Anspruch 1, wobei das Verfahren vor dem Schritt des Sendens (S204), durch den SBC, der Notrufanfrage an ein Proxy Call Session Control Funktions-, P-CSCF-Netzwerkelement weiter umfasst:
Beurteilen (S11), durch den SBC, ob die Notrufanfrage eine Auslösebedingung zum Senden der Notrufanfrage an das P-CSCF-Netzwerkelement erfüllt, wobei die Auslösebedingung mindestens beinhaltet, dass der SBC das Verankern eines Mediums für den Notruf abschließt; und
Auslösen (S12) des SBC zum Senden der Notrufanfrage an das P-CSCF-Netzwerkelement in dem Fall, dass die Notrufanfrage die Auslösebedingung erfüllt.

3. Verfahren nach Anspruch 1, wobei der Schritt des Vermittelns (S208), durch den SBC, des Notrufs als Antwort auf die Notrufvermittlungsanfrage umfasst:
Erfassen (S21), durch den SBC, einer durch den Notruf, der durch das Endgerät vor dem Vermitteln erstellt wurde, belegten Medienressource;
Durchführen (S22), durch den SBC, einer Medienverhandlung unter Verwendung der erfassten Medienressource, sodass das Endgerät den Notruf in dem vermittelten Netzwerk durch die Medienressource hindurch tätigt.

4. Verfahren nach Anspruch 3, wobei
der Schritt des Erfassens (S21), durch den SBC, einer durch den Notruf, der durch das Endgerät vor dem Vermitteln erstellt wurde, belegten Medienressource umfasst: Erfassen (S31), durch den SBC, der durch den Notruf, der durch das Endgerät vor dem Vermitteln erstellt wurde, angefragten PSAP; und
der Schritt des Durchführens (S22), durch den SBC, einer Medienverhandlung unter Verwendung der erfassten Medienressource umfasst: Zuweisen (S32), durch den SBC, der vor der Vermittlung angefragten PSAP, zum Notruf, der nach dem Vermitteln getätigt wird.

5. Verfahren nach Anspruch 3, wobei das Verfahren nach dem Schritt des Vermittelns (S208) durch den SBC, des Notrufs als Antwort auf die Notrufvermittlungsanfrage weiter mindestens einen der folgenden Schritte umfasst:
Freigeben (S41), durch den SBC, des durch das Endgerät vor dem Vermitteln erstellten Notrufs; und
Freischalten (S42) des durch das Endgerät nach dem Vermitteln getätigten Notrufs, nachdem der SBC bestimmt hat, dass das Endgerät den Notruf in dem vermittelten Netzwerk abschließt.

6. Verfahren nach Anspruch 1, wobei eine Vermittlung, die durch die Notrufvermittlungsanfrage angefragt wird, mindestens eines umfasst von: einer Notrufvermittlung, die durchgeführt wird, nachdem die Antwort von dem SBC an das vermittelte Netzwerk gesendet worden ist, einer Notrufvermittlung, die durchgeführt wird, bevor die Antwort von dem SBC an das vermittelte Netzwerk gesendet wird, einer Notrufvermittlung von dem Packet Service-, PS-Netzwerk an das Circuit Service-, CS-Netzwerk, oder einer Notrufvermittlung von dem Circuit Service-, CS-Netzwerk an das Packet Service-, PS-Netzwerk.

7. Verfahren nach einem der Ansprüche 1 bis 6, wobei der SBC, das P-CSCF-Netzwerkelement und das E-CSCF-Netzwerkelement in ein zusammengelegtes Netzwerkelement zusammengelegt werden.

8. Notrufvermittlungseinrichtung, die auf einen Session Border Controller, SBC, anwendbar ist, **dadurch gekennzeichnet, dass** die Notrufvermittlungseinrichtung Folgendes umfasst:
ein erstes Empfangsmodul (72), das konfiguriert ist, um eine von einem Endgerät gesendete Notrufanfrage zu empfangen;
ein Sendemodul (74), das konfiguriert ist, um die Notrufanfrage an ein Proxy Call Session Control Funktions-, P-CSCF-Netzwerkelement zu senden, sodass das P-CSCF-Netzwerkelement die Notrufanfrage anhand eines Notruf Session Control Funktions-, E-CSCF-Netzwerkelements an eine öffentliche Notrufzentrale, PSAP, sendet;
ein zweites Empfangsmodul (76), das konfiguriert ist, um eine Notrufvermittlungsanfrage, die von dem Endgerät gesendet wird, zu empfangen, wobei die Notrufvermittlungsanfrage eine Notruf-PS-CS-Vermittlungsanfrage und eine Notruf-CS-PS-Vermittlungsanfrage beinhaltet; und
ein Vermittlungsmodul (78), das konfiguriert ist, um den Notruf als Antwort auf die Notrufvermittlungsanfrage zu vermitteln, sodass das Endgerät den Notruf in einem vermittelten Netzwerk tätigt, wobei das vermittelte Netzwerk im Falle der Notruf-PS-CS-Vermittlungsanfrage ein Circuit Service-, CS-Netzwerk ist, und das vermittelte Netzwerk im Falle der Notruf-CS-PS-Vermittlungsanfrage ein Packet Service-, PS-Netzwerk ist.

9. Einrichtung nach Anspruch 8, weiter umfassend:
ein Beurteilungsmodul (82), das konfiguriert ist, um zu beurteilen, ob die Notrufanfrage eine Auslösebedingung zum Senden der Notrufanfrage an das P-CSCF-Netzwerkelement erfüllt, bevor der SBC die Notrufanrage an das P-CSCF-Netzwerkelement sendet, wobei die Auslösebedingung mindestens beinhaltet, dass der SBC das Verankern eines Mediums für den Notruf abschließt; und
ein erstes Verarbeitungsmodul (84), das konfiguriert ist, um den SBC zum Senden der Notrufanfrage an das P-CSCF-Netzwerkelement in dem Fall auszulösen, dass die Notrufanfrage die Auslösebedingung erfüllt.

10. Einrichtung nach Anspruch 8, wobei das Vermittlungsmodul (78) umfasst:
eine Erfassungseinheit (92), die konfiguriert ist, um eine durch den Notruf, der durch das Endgerät vor dem Vermitteln erstellt wird, belegte Medienressource zu erfassen;
eine Verarbeitungseinheit (94), die konfiguriert ist, um unter Verwendung der erfassten Medienressource eine Medienverhandlung durchzuführen, sodass das Endgerät den Notruf in dem vermittelten Netzwerk durch die Medienressource hindurch tätigt.

11. Einrichtung nach Anspruch 10, wobei
die Erfassungseinheit (92) weiter konfiguriert ist, um die durch den Notruf, der durch das Endgerät vor dem Vermitteln erstellt wird, angefragte PSAP zu erfassen;
die Verarbeitungseinheit (94) weiter konfiguriert ist, um die vor der Vermittlung angefragte PSAP dem Notruf, der nach dem Vermitteln getätigt wird, zuzuweisen.

12. Einrichtung nach Anspruch 11, wobei die Einrichtung weiter mindestens eines umfasst aus:
einem ersten Freischaltmodul (102), das konfiguriert ist, um den durch das Endgerät vor dem Vermitteln erstellten Notruf freizuschalten, nachdem der SBC den Notruf als Antwort auf die Notrufvermittlungsanfrage vermittelt; und
ein zweites Freischaltmodul (104), das konfiguriert ist, um nach dem Bestimmen, dass das Endgerät den Notruf in dem vermittelten Netzwerk abschließt, den von dem Endgerät nach dem Vermitteln getätigten Notruf freizuschalten.

13. Einrichtung nach Anspruch 8, wobei eine Vermittlung, die durch die Notrufvermittlungsanfrage angefragt wird, mindestens eines umfasst von: einer Notrufvermittlung, die durchgeführt wird, nachdem die Antwort von dem SBC an das vermittelte Netzwerk gesendet wird, einer Notrufvermittlung, die durchgeführt wird, bevor die Antwort von dem SBC an das vermittelte Netzwerk gesendet wird, einer Notrufvermittlung von dem Packet Service-, PS-Netzwerk an das Circuit Service-, CS-Netzwerk, oder einer Notrufvermittlung von dem Circuit Service-, CS-Netzwerk an das Packet Service-, PS-Netzwerk.

14. Einrichtung nach einem der Ansprüche 8 bis 13, weiter umfassend: ein zweites Verarbeitungsmodul (112), das konfiguriert ist, um den SBC, das P-CSCF-Netzwerkelement und das E-CSCF-Netzwerkelement in ein zusamengelegtes Netzwerkelement zusammenzulegen.

## Revendications

1. Procédé de commutation d'appel d'urgence, **caractérisé en ce que** le procédé comprend les étapes de :
réception (S202), par un contrôleur de session en périphérie SBC, une demande d'appel d'urgence envoyée depuis un terminal ;
envoi (S204), par le SBC, de la demande d'appel d'urgence à un élément de réseau de fonction mandataire de commande de session d'appel P-CSCF, de sorte que l'élément de réseau P-CSCF envoie la demande d'appel d'urgence à un centre d'appels de sécurité publique PSAP au moyen d'un élément de réseau de fonction de commande de session d'appel d'urgence E-CSCF ;
réception (S206), par le SBC, d'une demande de commutation d'appel d'urgence envoyée depuis le terminal, dans lequel la demande de commutation d'appel d'urgence comporte une demande de commutation PS-CS d'appel d'urgence et une demande de commutation CS-PS d'appel d'urgence ; et
commutation (S208), par le SBC, de l'appel d'urgence en réponse à la demande de commutation d'appel d'urgence, de sorte que le terminal passe l'appel d'urgence dans un réseau commuté, dans lequel dans le cas de la demande de commutation PS-CS d'appel d'urgence, le réseau commuté est un réseau de service de circuits CS, et dans le cas de la demande de commutation CS-PS d'appel d'urgence, le réseau commuté est un réseau de service de paquets PS.

2. Procédé selon la revendication 1, dans lequel avant l'étape d'envoi (S204), par le SBC, de la demande d'appel d'urgence à l'élément de réseau P-CSCF, le procédé comprend en outre :
le jugement (S11), par le SBC, du fait que la demande d'appel d'urgence satisfait ou non une condition de déclenchement pour envoyer la demande d'appel d'urgence à l'élément de réseau P-CSCF, dans lequel la condition de déclenchement comporte au moins le fait que le SBC établit un ancrage multimédia pour l'appel d'urgence ; et
le déclenchement (S12) du SBC pour envoyer la demande d'appel d'urgence à l'élément de réseau P-CSCF dans le cas où la demande d'appel d'urgence satisfait la condition de déclenchement.

3. Procédé selon la revendication 1, dans lequel l'étape de commutation (S208), par le SBC, de l'appel d'urgence en réponse à la demande de commutation d'appel d'urgence, comprend :
l'acquisition (S21), par le SBC, d'une ressource multimédia occupée par l'appel d'urgence établi par le terminal avant la commutation ; et
la réalisation (S22), par le SBC, d'une négociation multimédia par l'utilisation de la ressource multimédia acquise, de sorte que le terminal passe l'appel d'urgence dans le réseau commuté par le biais de la ressource multimédia.

4. Procédé selon la revendication 3, dans lequel l'étape d'acquisition (S21), par le SBC, d'une ressource multimédia occupée par l'appel d'urgence établi par le terminal avant la commutation, comprend : l'acquisition (S31), par le SBC, du PSAP demandé par l'appel d'urgence établi par le terminal avant la commutation ; et
l'étape de réalisation (S22), par le SBC, d'une négociation multimédia par l'utilisation de la ressource multimédia acquise, comprend : l'attribution (S32), par le SBC, du PSAP demandé avant la commutation à l'appel d'urgence passé après la commutation.

5. Procédé selon la revendication 3, dans lequel après l'étape de commutation (S208), par le SBC, de l'appel d'urgence en réponse à la demande de commutation d'appel d'urgence, le procédé comprend en outre au moins l'une des étapes de :
libération (S41), par le SBC, de l'appel d'urgence établi par le terminal avant la commutation ; et
libération (S42) de l'appel d'urgence passé par le terminal après la commutation une fois que le SBC détermine que le terminal établit l'appel d'urgence dans le réseau commuté.

6. Procédé selon la revendication 1, dans lequel une commutation demandée par la demande de commutation d'appel d'urgence comprend au moins l'une parmi : une commutation d'appel d'urgence réalisée après l'envoi de la réponse du SBC au réseau commuté, une commutation d'appel d'urgence réalisée avant l'envoi de la réponse du SBC au réseau commuté, une commutation d'appel d'urgence du réseau de service de paquets PS au réseau de service de circuits CS, ou une commutation d'appel d'urgence du réseau de service de circuits CS au réseau de service de paquets PS.

7. Procédé selon l'une quelconque des revendications 1 à 6, dans lequel le SBC, l'élément de réseau P-CSCF, et l'élément de réseau E-CSCF sont fusionnés en un élément de réseau fusionné.

8. Appareil de commutation d'appel d'urgence applicable à un contrôleur de session en périphérie SBC, **caractérisé en ce que** l'appareil de commutation d'appel d'urgence comprend :
un premier module de réception (72) configuré pour recevoir une demande d'appel d'urgence envoyée depuis un terminal ;
un module d'envoi (74) configuré pour envoyer la demande d'appel d'urgence à un élément de réseau de fonction mandataire de commande de session d'appel P-CSCF, de sorte que l'élément de réseau P-CSCF envoie la demande d'appel d'urgence à un centre d'appels de sécurité publique PSAP au moyen d'un élément de réseau de fonction de commande de session d'appel d'urgence E-CSCF ;
un second module de réception (76) configuré pour recevoir une demande de commutation d'appel d'urgence envoyée depuis le terminal, dans lequel la demande de commutation d'appel d'urgence comporte une demande de commutation PS-CS d'appel d'urgence et une demande de commutation CS-PS d'appel d'urgence ; et
un module de commutation (78) configuré pour commuter l'appel d'urgence en réponse à la demande de commutation d'appel d'urgence, de sorte que le terminal passe l'appel d'urgence dans un réseau commuté, dans lequel dans le cas de la demande de commutation PS-CS d'appel d'urgence, le réseau commuté est un réseau de service de circuits CS, et dans le cas de la demande de commutation CS-PS d'appel d'urgence, le réseau commuté est un réseau de service de paquets PS.

9. Appareil selon la revendication 8, comprenant en outre :
un module de jugement (82) configuré pour juger si la demande d'appel d'urgence satisfait une condition de déclenchement pour envoyer la demande d'appel d'urgence à l'élément de réseau P-CSCF avant l'envoi par le SBC de la demande d'appel d'urgence à l'élément de réseau P-CSCF, dans lequel la condition de déclenchement comporte au moins le fait que le SBC établit un ancrage multimédia pour l'appel d'urgence ; et
un premier module de traitement (84) configuré pour déclencher le SBC pour envoyer la demande d'appel d'urgence à l'élément de réseau P-CSCF dans le cas où la demande d'appel d'urgence satisfait la condition de déclenchement.

10. Appareil selon la revendication 8, dans lequel le module de commutation (78) comprend :
une unité d'acquisition (92), configurée pour acquérir une ressource multimédia occupée par l'appel d'urgence établi par le terminal avant la commutation ; et
une unité de traitement (94), configurée pour réaliser une négociation multimédia à l'aide de la ressource multimédia acquise, de sorte que le terminal passe l'appel d'urgence dans le réseau commuté par le biais de la ressource multimédia.

11. Appareil selon la revendication 10, dans lequel
l'unité d'acquisition (92) est en outre configurée pour acquérir le PSAP demandé par l'appel d'urgence établi par le terminal avant la commutation, et
l'unité de traitement (94) est en outre configurée pour attribuer le PSAP demandé avant la commutation à l'appel d'urgence passé après la commutation.

12. Appareil selon la revendication 11, dans lequel l'appareil comprend en outre au moins l'un parmi :
un premier module de libération (102) configuré pour libérer l'appel d'urgence établi par le terminal avant la commutation, après la commutation par le SBC de l'appel d'urgence en réponse à la demande de commutation d'appel d'urgence ; et
un second module de libération (104) configuré pour, après la détermination du fait que le terminal établit l'appel d'urgence dans le réseau commuté, libérer l'appel d'urgence passé par le terminal après la commutation.

13. Appareil selon la revendication 8, dans lequel une commutation demandée par la demande de commutation d'appel d'urgence comprend au moins l'une parmi : une commutation d'appel d'urgence réalisée après l'envoi de la réponse du SBC au réseau commuté, une commutation d'appel d'urgence réalisée avant l'envoi de la réponse du SBC au réseau commuté, une commutation d'appel d'urgence du réseau de service de paquets PS au réseau de service de circuits CS, ou une commutation d'appel d'urgence du réseau de service de circuits CS au réseau de service de paquets PS.

14. Appareil selon l'une quelconque des revendications 8 à 13, comprenant en outre : un second module de traitement (112) configuré pour fusionner le SBC, l'élément de réseau P-CSCF, et l'élément de réseau E-CSCF en un élément de réseau fusionné.
